# EUROPEAN PATENT APPLICATION

(11) **EP 4 789 833 A1**
(43) Date of publication of application: **12.08.2026**
(21) Application number: 25156293.0
(22) Date of filing: 06.02.2025
(51) Int. Cl.: B29B 17/00, G06Q 10/30

(54) **METHODS AND SYSTEMS FOR THE IDENTIFICATION OF MIXTURES OF PLASTIC OBJECTS**

(71) Applicant: ZARGARZADEH, Payam, Milton Keynes MK107FS (GB)
(72) Inventor: ZARGARZADEH, Payam, Milton Keynes MK107FS (GB)
(74) Representative: EP&C

(57) **Abstract**

The invention relates to a method for the identification of a mixture of plastic objects, comprising: a) providing a plurality of plastic objects; b) detecting individual plastic objects from the plurality of plastic objects and obtaining at least one identification characteristic of each plastic object; c) comparing the at least one identification characteristic of each plastic object with a data library comprising object IDs assigned to plastic objects, wherein the object IDs comprise object characteristics; d) identifying each individual plastic object by comparing the at least one identification characteristic as obtained in step b) with the object IDs from the data library; e) collecting a set of identified individual plastic objects and providing a report containing collective object characteristics of the set of collected individual objects; f) optionally creating a label providing access to the report; g) optionally bundling the set of individual plastic objects, thereby providing a bundle; and optionally labelling the bundle with the label created in step f).

## Description

### Field of the invention

The present invention relates to methods and systems for the identification of mixtures of plastic objects, thereby generating identified feedstock, for example to operate a reactor system for chemically recycling plastics with optimized operating parameters based on the characteristics of the feedstock.

### State of the art

Plastic waste has led to widespread pollution, having a negative impact on the environment. Recycling of plastic waste keeps plastic waste out of the environment and allows it to be reused. Recycling plastics is an important environmental demand by many countries.

There are different types of recycling, such as mechanical and chemical recycling. Mechanical recycling in general produces recycled plastic materials with lower-quality properties over the virgin material, due to the fact that the recycled product comprises a blend of different grades of plastic material. Mechanical recycling typically comprises separating types of plastics, cleaning and grinding separated plastics, colour sorting, and extrusion to produce granulate, which can be reprocessed to products.

An alternative to mechanical recycling is chemical recycling, whereby the plastics are broken down into lower molecular weight fractions, which may comprise building blocks, such as monomers, attractive to meet industrial demands and other chemical components, which can be used for example as fuel, lubricants, and so on. From these monomers, new, useful polymers could be produced with properties comparable to virgin materials.

To make chemical recycling economically feasible, it needs to be efficient and cheap and suited to a large part of the generated plastic waste. Each feedstock has its own ideal parameters for efficient and cheap chemical recycling in a reactor. However, plastic waste streams collected by e.g. municipalities or waste facilities are often ill-defined and ever-changing. It is a challenge to recycle such waste cheaply and efficiently. Therefore, such waste is poorly suited for use as feedstock for chemical recycling.

In order to efficiently recycle plastics chemically, the operating parameters of the reactor needs to be optimized to match the composition of the plastic waste fed into the reactor. Thus, ever changing / poorly defined plastic waste streams reduce the efficiency of the chemical reactor, as this results in a mismatch between the feedstock and the operating parameters of the chemical reactor.

Current chemical recycling strategies often rely on the sorting of plastic waste into different compatible plastic types in order to operate the reactor.

US12030088BB relates to the sorting of materials, and in particular, to the sorting of materials using multiple stages of sorting.

US2024157402AA relates to a method for the identification and/or sorting of objects, in particular for the recycling of materials and based on artificial intelligence technologies.

A disadvantage is that the costs associated with sorting plastics is high. Another disadvantage is that some plastic streams, like some combinations of polyethylene (PE), polypropylene (PP), polyethylene terephthalate (PET), polyvinylchloride (PVC) and polystyrene (PS) are not compatible, and therefore need to be recycled separately, or in a different mixture ratio, which will increase the costs. Here, with not compatible is meant that some types of plastics are not suitable to be processed in the same process under the same processing conditions as another type of plastic. For example, it might be unwanted to recycle PVC or PET together with PE and/or PP.

The present invention solves at least part of these problems.

### Summary of the invention

The present invention relates to a method for identification of a mixture of plastic objects, comprising:
a) providing a plurality of plastic objects;
b) detecting individual plastic objects from the plurality of plastic objects and obtaining at least one identification characteristic of each plastic object;
c) comparing the at least one identification characteristic of each plastic object with a data library comprising object IDs assigned to plastic objects, wherein the object IDs comprise object characteristics;
d) identifying each individual plastic object by comparing the at least one identification characteristic as obtained in step b) with the object IDs from the data library;
e) collecting a set of identified individual plastic objects and providing a report containing collective object characteristics of the set of collected individual objects;
f) optionally creating a label providing access to the report; and
g) optionally bundling the set of individual plastic objects, thereby providing a bundle; and optionally labelling the bundle with the label created in step f).

The present invention further relates to a system for identification of a mixture of plastic objects.

The method offers several advantages over the prior art. Instead of sorting plastic waste into categories, a mixture of plastic objects is identified and collected into a set. A report containing collective object characteristics of the set of collected individual objects is provided. This report can be used as input to optimize the operating parameters of a reactor for the chemical recycling of plastics, improving the efficiency of the chemical recycling. Examples of operating parameters for a chemical recycling process that can be set based on the report are the amount of catalyst, water, slurry mixture, the temperature, pressure and residence time.

An advantage of the present invention is therefore that the collective object characteristics of each set of collected individual plastic objects are known, despite the composition of waste streams such as urban waste streams being ill-defined and ever-changing.

It is a further advantage of this method that the operating parameters of a chemical recycling process can be optimized based on the collective object characteristics of the set of plastic objects to be used as feedstock. It is a further advantage of the present invention that the plastic objects for which at least one object characteristic is detected, are collected in sets. The collective object characteristics of sets can then be used to decide the order in which they are fed into the reactor, based on e.g. similarity in composition between sets. The most important collective object characteristics on the basis of which this decision can be made are the types of plastic and the relative amount of each type of plastic in the set of collected plastic objects. For example, if a set of collected plastic objects comprises PVC in an amount that it is incompatible with a particular chemical recycling process, the set of collected plastic objects will not be recycled using said chemical recycling process.

### Detailed description of the invention

The present invention relates to a method for the identification of a mixture of plastic objects, comprising:
a) providing a plurality of plastic objects;
b) detecting individual plastic objects from the plurality of plastic objects and obtaining at least one identification characteristic of each plastic object;
c) comparing the at least one identification characteristic of each plastic object with a data library comprising object IDs assigned to plastic objects, wherein the object IDs comprise object characteristics;
d) identifying each individual plastic object by comparing the at least one identification characteristic as obtained in step b) with the object IDs from the data library;
e) collecting a set of identified individual plastic objects and providing a report containing collective object characteristics of the set of collected individual objects;
f) optionally creating a label providing access to the report; and
g) optionally bundling the set of individual plastic objects, thereby providing a bundle; and optionally labelling the bundle with the label created in step f).

The plurality of plastic objects may originate from plastic waste. The plastic waste may be of rural or urban origin. The plastic waste may for example be collected plastic waste such as municipal waste, or industrial waste.

The plastic objects may comprise different types of plastics. Examples of types of plastics are low-density polyethylene (LDPE), high-density polyethylene (HDPE), polypropylene (PP), polystyrene (PS), polyethylene terephthalate (PET), acrylonitrile butadiene styrene (ABS), and polyvinylchloride (PVC).

The plurality of plastic objects may comprise one or more types of plastic. The plastic objects may be monolayer or multilayer plastics. An example of a multilayer plastics object is a crisp packet. The plastic objects may be plastic composites, such as wood-plastic composites, fibre-reinforced plastics, laminates, filled plastics materials and the like.

The plurality of plastic objects may comprise thermosets and/or thermoplastics.

Other materials may be comprised in the plurality of plastic objects. For example, the plurality of plastic objects may comprise food residues, oils, paper, labels, and inorganic materials, such as metal or glass.

Plastic objects are often used as packaging material or as container, e.g. for food or cosmetics. When such plastic objects are comprised in the plurality of plastic objects, the plastic objects may contain residues. For example, milk bottles may contain milk, or a laundry detergent bottle may contain laundry detergent.

Plastic objects are preferably intact objects, as this increases the accuracy of the identification of plastic objects according to the present invention.

The plastic objects may be cleaned prior to performing a method according to the present invention, as cleaning plastic objects can enable the more accurate identification of plastic objects using a method according to the present invention. Cleaning may for example be carried out when the plastic objects are so dirty that it hinders the identification of the mixture of plastic objects. More preferably, the plastic objects are not cleaned, as this keeps the cost of carrying out the method low. For example, plastic objects are not cleaned when there is no need to (e.g. when the plastic objects are substantially clean).

The individual plastic objects comprised in the plurality of plastic objects preferably are individually detectable. Therefore, the plurality of plastic objects may undergo a suitable method to make individual objects detectable in step b), e.g. by separating individual objects. In some embodiments, full separation of each plastic object may not be necessary, as individual plastic objects may still be detectable with some amount of overlap between plastic objects.

Separating individual objects to make detection possible and/or easy can be done for example by placing the plurality of plastic objects on a conveyor system. Other examples of means to make individual plastic objects detectable from the plurality of plastic objects are the use of tumblers, vibrators, e.g. vibrating tables, singulators, or placing the objects on a flat surface and spreading the objects, e.g. by hand or by machine. Other options are floating the plurality of plastic objects on a liquid like water, or letting a stream of plastic objects fall down from a height in a controlled manner. Preferably, a conveyor system is used to make individual plastic objects detectable.

The conveyor system for use in the method may be any equipment that moves materials from one location to another location. Examples of such conveying systems are conveyor belts and screw conveyors. The conveyor system can move the plastic objects past different components used in the method according to the present invention, such as the detecting means according to step b). The volume of plastic objects placed on the conveyor system and the speed at which the plastic objects are moved by the conveyor system may be chosen freely. Preferably, the volume and speed allow for each individual plastic object to be detected by the detecting means according to step b).

In an embodiment, the conveyor system moves plastic objects with a speed of between 0.25 - 3.0 m/s, preferably between 0.4 -1.0 m/s, most preferably about 0.5 m/s.

In an embodiment, the volume of plastic waste processed by the conveying system is between 5000 - 200,000 kg/hour

Individual plastic objects are detected from the plurality of plastic objects by a detection setup. The detection setup may comprise one or more sensors.

Any type of sensor that is suitable for obtaining object characteristics may be used. Preferably, the sensor utilizes irradiated or reflected radiation. The one or more sensors may operate at a single or multiple wavelength or frequency. The one or more sensors may be configured to measure a spectrum of Infra-red and visible light radiation. Examples of suitable sensors include infrared (IR) sensors, Fourier transform IR (FTIR) sensors, near infrared (NIR) sensors, visible spectrum sensors, sensors for laser-induced breakdown (LIBS) spectroscopy, laser object detection (LOD) sensors, X-ray transmission (XRT) sensors, ultraviolet (UV) sensors, X-ray fluorescence (XRF) sensors and cameras. Some examples of sensors configured to record spectra of electromagnetic radiation are Raman spectra, LIBS spectra, and NIR spectra.

The detection setup may comprise a vision system, such as a camera. In an embodiment, the detection setup comprises a camera which records or captures images of plastic objects on the conveyor system. In a preferred embodiment, the detection setup may record or capture images captured using cameras, i.e. cameras with optical sensors within the wavelengths of light observable by the human eye. Preferably, the camera is a high-speed camera. In another embodiment, the detection setup utilizes a vision system that captures or records images using wavelengths of light not observable by the human eye. Such a setup may use e.g. infrared light, or ultraviolet light. An example is a near-infra red (NIR) camera.

The detection system may be configured to analyse the recorded or captured images to determine what constitutes an individual plastic object.

At least one identification characteristic of each plastic object is obtained using an identification setup. The identification setup may be the same as the detection setup, comprising the same one or more sensors. The identification setup and detection setup may be different from each other, comprising one or more sensors different from each other.

In a preferred embodiment, the one or more sensors can act both as detection setup to detect individual plastic objects and as identification setup to obtain at least one identification characteristic of each individual plastic object.

In another preferred embodiment, the one or more sensors comprise a vision system which can be used in both the detection setup to detect individual plastic objects and in the identification setup to obtain at least one identification characteristic of each individual plastic object.

Examples of characteristics that can be used as identification characteristics are the size, shape, colour, weight, texture, and transparency of a plastic object. Other examples of characteristics that can be used as identification characteristics are a bar code, a resin identification code, and a manufacturer label.

The identification characteristic determined for each plastic object is processed by comparison with data comprised in a data library. The data library comprises a list of object IDs assigned to plastic objects. The data library may also comprise object IDs for contaminants, such as food residues, glass, paper, metal materials, or others. In an embodiment, these contaminants are classified in the data library as impurities. Each object ID is preferably linked to object characteristics known for that object. The at least one identification characteristic obtained for an individual object is compared to the known object characteristics for each object ID in the library.

The data library may be generated in different ways. As an example, the data library may be generated based on a *priori* information, e.g. information provided by manufacturers of plastic objects. In an embodiment, the data library is generated to be representative for the prevalent plastic objects in the region from which the plastic waste is collected. In an embodiment, the data library uses information provided by major plastic waste sources, an example of which is a supermarket's catalogue, comprising pictures of products on sale, comprising relevant plastic objects, wherein the catalogue comprises information on the plastic objects, such as the plastic resin code, on-pack recycling label (OPRL), Mobius loop, etc. Object ID entries in the data library may be generated by determining the relevant object characteristics of a known plastic object.

The data library may be updated when appropriate. For example, object IDs may be added manually. Information comprised in the data library may be added manually or adapted dynamically by e.g. an artificial intelligence and/or machine learning model that can adapt the data library as a result of training or optimization procedures, or when carrying out the method according to the present invention.

For each object represented by an object ID in the data library, object characteristics are known. Examples of object characteristics for plastic objects are the type or types of plastic (for example chemical composition), the mass, the size, the shape, the colour and the texture. Other examples of comprised object characteristics are colourants, flame retardants, stabilizers. Further examples of object characteristics are the place of origin, the manufacturer of the object, any other materials which the object comprises. Such other materials are e.g. paper or metal for multilayer materials such as e.g. crisp bags.

Step d) of identifying of each individual plastic object according to the method of the present invention means that individual plastic objects are passed through an identification setup and, where possible, are positively identified. The plastic object is identified and assigned an object ID from the data library when a match is found between the identification characteristic and known object characteristics of an object represented by an object ID in the data library. This is called positive identification. In a preferred embodiment of the method, a match is found through image processing, i.e. when an image captured from an individual plastic object using a camera matches that of an image of an object comprised in the data library. All object characteristics assigned to the object ID are correspondingly assigned to the identified plastic object. The identification process is performed by a computer process, such as a computer program or software.

Individual plastic objects which cannot be positively identified, i.e. when no match is found between the identification characteristic and known object characteristics of an object represented by an object ID in the data library, are negatively identified as unknown objects.

As a rule, no plastic objects are separated from the plurality of plastic objects. However, in an embodiment, plastic objects for which no matches are found, that is, the negatively identified plastic objects, are marked by the computer process, e.g. digitally marked on a computer screen which allows an operator to separate the object manually, or e.g. separated from the identified objects mechanically from the plurality of plastic objects through an automated process. Preferably, these plastic objects are then manually processed, in an offline process, which entails gathering of all object characteristics of the plastic object which are known for objects included in the data library, upon which a new entry is added to the data library, comprising a new object ID is and the gathered object characteristics. The plastic object is now able to be identified by the method according to the invention. Over time, the number of negatively identified plastic objects should decrease as the data library is updated.

Preferably, more than 90% of the plastic objects are positively identified, even more preferably more than 95%, yet even more preferably more than 97%, and most preferably more than 99%.

In a preferred embodiment, steps b) and/or c) and/or d) of the method comprise the use of artificial intelligence (Al) and/or any suitable machine learning (ML) system, implementing models such as neural network models, active learning components, k-nearest neighbor models, support vector machine models, decision tree models, and partial least-squares discriminant analysis models.

The AI and/or ML system interprets the data generated by the camera and/or other sensors, from which an identification characteristic is derived. Since ML may recognize subtle differences in data (e.g. spectra or images) of different objects, this may improve the accuracy of the identification process.

The AI and/or ML system compares this identification characteristic with the characteristics of the object IDs in the data library, and determines the identity of the individual plastic objects.

The ML model may be trained on data sets.

Preferably, the AI and/or ML system learns actively (i.e. in operation) to continuously improve the identification efficiency and accuracy. In an embodiment, the AI and/or ML system may improve the data library by improving the comprised data (e.g. properties of the object IDs).

Preferably, the AI and/or ML system knows how to deal with unidentifiable objects (e.g. because they are not recognized, not comprised in the data library, overlapping with each other, too dirty) or other conflicting information. In an embodiment, the unidentifiable, i.e. negatively identified, object will be reported to an operator and after manual identification will be added to the data library.

The AI / ML system identifies objects based on the best match with an object ID.

A set of identified plastic objects is collected. Any means of collecting the set of plastic objects may be used. The identified plastic objects in the set can be positively and negatively identified objects. Preferably, the identified objects are positively identified plastic objects.

A report is provided, comprising the collective object characteristics of the identified plastic objects in the set. The collective object characteristics of the set are determined based on the object characteristics of each individual object in the collected set of identified plastic objects. Preferably, the object characteristics of each individual object are combined to arrive at the collective object characteristics. The collective object characteristics may be determined using any software / program configured to do so.

Preferably, the report comprises the collective object characteristics of the set in a form suitable as input for optimizing the operating parameters of a chemical reactor, based on which the chemical recycling of the set of plastic objects is performed efficiently.

For example, a collective object characteristic may be provided in the report in the form of a list comprising the different classes or groups represented in the set of collected identified plastic objects as a number-averaged, mass-averaged, or volume-averaged amount or fraction. For example, the report comprises a list of the types of plastics comprised in the set as weight fractions.

Preferably, the report reflects the type or types of plastics and the amount of each type of plastic comprised in the collected set of individual plastic objects.

The report may contain additional information, such as geographical origin of the plastic objects, date the plastic objects were collected, quantity of plastic objects, rural / urban waste identifiers, and more. This information may be used to identify patterns in waste generation and optimize collection and recycling systems. The report may furthermore contain information such as the date and location of processing by the method according to the invention, and the size or mass of the collected set of plastic objects.

A label may be created. The label is coupled to the corresponding set of collected plastic objects and gives access to the report. The label may be a barcode, a QR code, a serial number, etc. Preferably, the label is a QR code. The label may be read by a suitable QR reader / scanner, etc. to gain access to the report. Preferably, the label gives digital access to the report. In a preferred embodiment, the label provides access to the report in a format from which the operating parameters for a chemical recycling reactor can be determined by e.g. an algorithm, without requiring further manual actions.

The collected set of plastic objects may be bundled, thereby providing a bundle.

Preferably, the bundle has a mass between 200 - 1500 kg, more preferably 800 - 1250 kg, or about 1000 kg.

Preferably, the bundle has a volume between 0.25 - 4 m³, more preferably 0.5 - 3 m³, even more preferably between 1 - 2.5 m³, or about 2 m³.

The bundle may be created by compressing the collected set of plastic objects into a limited volume for ease of transport and follow up actions, like chemical recycling. An advantage of compressing the collected set of plastic objects is that compressing may remove at least part of any liquid residues comprised in the collected set of plastic objects.

The bundle may be created by wrapping the collected set of plastic objects in plastic, e.g. in PE wrap. Such a bundle facilitates transportation of the collected set of objects to a chemical recycling facility / to a chemical recycling reactor. Preferably, the bundle can be loaded into the reactor without further processing. Optionally, further processing may be performed, for example when the collective object characteristics indicate that further processing would be beneficial or that processing the bundle without further processing would be incompatible with the chemical reactor in which it would be recycled.

In an embodiment, the collected set of plastic objects are collected in a collection tank and compressed in the collection tank to form a bundle.

In a preferred embodiment, the set of plastic objects is collected in a collection tank and compressed into a plastic cube, for example a plastic cube with a mass of about 1000 kg and dimensions of 1.2 m by 1.1 m by 1.5 m, and is wrapped in plastic film, e.g. PE film, thereby providing a bundle that is convenient to transport and process for e.g. plastic recycling.

The bundle may be labelled with the label, giving access to the report comprising the collective object characteristics of the collected plastic objects comprised in the bundle.

## Claims

1. A method for the identification of a mixture of plastic objects, comprising:
a) providing a plurality of plastic objects;
b) detecting individual plastic objects from the plurality of plastic objects and obtaining at least one identification characteristic of each plastic object;
c) comparing the at least one identification characteristic of each plastic object with a data library comprising object IDs assigned to plastic objects, wherein the object IDs comprise object characteristics;
d) identifying each individual plastic object by comparing the at least one identification characteristic as obtained in step b) with the object IDs from the data library;
e) collecting a set of identified individual plastic objects and providing a report containing collective object characteristics of the set of collected individual objects;
f) optionally creating a label providing access to the report; and
g) optionally bundling the set of individual plastic objects, thereby providing a bundle; and optionally labelling the bundle with the label created in step f).

2. The method according to claim 1, wherein the label is created.

3. The method according to claim 1 or 2, wherein the bundle is provided.

4. The method according to any one of the preceding claims, wherein the detection of the individual objects is facilitated by placing the plurality of objects on a conveyor belt

5. The method according to any one of the preceding claims, wherein the individual plastic objects are detected by a camera setup.

6. The method according to any one of the preceding claims, wherein the at least one identification characteristic is obtained using a camera setup and/or a sensor.

7. The method according to any one of the preceding claims, wherein the identification of each individual plastic object comprises the use of an artificial intelligence ("Al") and/or machine learning system.

8. The method according to any one of the preceding claims, wherein the set of identified individual plastic objects are collected in a container suitable for further use.

9. The method according to any one of the preceding claims, wherein the report reflects the type or types of plastics and the amount of each type of plastic comprised in the collected set of individual plastic objects.

10. The method according to any one of the preceding claims, wherein the label is a QR code.

11. A bundle comprising a set of individual plastic objects identified using the method according to any of claims 3 - 10, wherein the bundle is labelled with a label.

12. A bundle comprising a set of individual plastic objects identified using the method according to claim 11, wherein the label provides access to the report, wherein the report reflects the type or types of plastics and the amount of each type of plastic comprised in the collected set of individual plastic objects.

13. A system for the identification of a mixture of plastic objects, comprising:
a) a detection setup configured to detect individual plastic objects from a plurality of plastic objects and obtain at least one identification characteristic of each plastic object;
b) a data library comprising object IDs assigned to plastic objects, wherein the object IDs comprise object characteristics;
c) an identification setup configured to identify individual plastic objects by comparing the at least one identification characteristic as obtained with the detection setup of a) with the object IDs from the data library of step b);
d) a reporting system configured to provide a report containing collective object characteristics of a set of collected individual objects;
e) optionally a bundling setup to bundle the set of collected individual objects, thereby providing a bundle; and
f) optionally a labelling setup configured to create a label providing access to the report and optionally label the bundle with the label.
